# FASCICULE DE BREVET EUROPEEN

(11) **EP 2 408 609 B1**
(45) Date de publication et mention de la délivrance du brevet: **27.02.2013**
(21) Numéro de dépôt: 10715302.5
(22) Date de dépôt: 05.03.2010
(51) Int. Cl.: B29C 70/38, B29C 70/50

(54) **PROCEDE ET DISPOSITIF DE FABRICATION AUTOMATISEE D'AU MOINS UNE PIECE ALLONGEE A UNE OU PLUSIEURS COUCHES EN MATERIAUX COMPOSITES**
VERFAHREN UND VORRICHTUNG FÜR DIE AUTOMATISIERTE HERSTELLUNG VON MINDESTENS EINEM LÄNGLICHEN VERBUNDTEIL MIT EINER ODER MEHREREN LAGEN
METHOD AND DEVICE FOR THE AUTOMATED MANUFACTURE OF AT LEAST ONE ELONGATE COMPOSITE MATERIAL PART WITH ONE OR MORE LAYERS

(30) Priorité: 05.03.2009 FR 0951395
(43) Date de publication de la demande: 25.01.2012
(73) Titulaire: Constructions Industrielles de la Méditerranée - CNIM, 75008 Paris (FR)
(72) Inventeur: COLOMBO, Denis, F-83110 Sanary sur Mer (FR); VALIBOUSE, Pierre, F-83990 SAINT-TROPEZ (FR); MAILHOT, Dominique, F-83500 La Seyne sur Mer (FR); MICHEAUX, Dominique, F-83110 Sanary sur Mer (FR)
(74) Mandataire: Thinat, Michel
(86) Numéro de dépôt international: PCT/FR2010/050381
(87) Numéro de publication internationale: WO 2010/100386

(56) Documents cités:
- EP-A- 1 504 880
- EP-A- 1 894 706
- US-A1- 2005 023 728

## Description

La présente invention concerne un procédé et un dispositif pour la fabrication de pièces de structure en matériaux composites de formes allongées.

De telles pièces peuvent avoir des géométries variables et leur section, constante ou variable, peuvent présenter plusieurs formes, par exemple en oméga, Cé, Té, I, L, Z ou autres, et peuvent être utilisées en tant que raidisseurs dans le domaine aéronautique.

Plusieurs techniques sont actuellement utilisées pour fabriquer ce type de pièces.

La technique la plus courante utilise le drapage manuel consistant à déposer manuellement sur un moule ayant la géométrie souhaitée plusieurs plis ou couches en matériaux composites. Outre la lenteur du procédé de drapage, due au dépôt à la main de différentes couches sur le moule, cette technique connue nécessite également des opérations de compactage intermédiaires des couches déposées afin d'évacuer l'air emprisonné dans les différentes couches. De tels compactages s'effectuent en plaçant la pièce à réaliser sous une bâche dans laquelle le vide est formé. Ces opérations de compactage intermédiaires accroissent la lenteur de la technique de drapage manuel et la rend donc incompatible à la fabrication de pièces de structure en matériau composite à des cadences industrielles élevées.

On a déjà cherché à résoudre ce problème en développant plusieurs techniques de fabrication automatisée de pièces de structure en matériau composite.

L'une de ces techniques est la pultrusion qui consiste à tirer des fibres imprégnées de résine à travers un moule filière où s'effectue la mise en forme et la réticulation des couches des pièces à réaliser. Cette technique est limitée en ce qu'il est très difficile d'obtenir une orientation des fibres des couches en matériaux composites différente de leur direction principale et en ce qu'elle ne permet pas de fabriquer des pièces courbes.

Une autre technique connue consiste à utiliser des machines de façonnage à chaud (hot drape forming) pour le secteur aéronautique permettant de draper les plis ou couches de la pièce à réaliser sur une surface plane avant de les former à chaud dans une presse. Les limites de cette technique connue sont essentiellement liées à la longueur des pièces à réaliser du fait qu'il est nécessaire d'utiliser une presse de la longueur de ces pièces.

Une autre technique décrite par exemple dans la demande de brevet WO 2005/011961 utilise une machine permettant de former et compacter des raidisseurs rectilignes ou peu courbés sans limite de taille, mais une telle machine est d'une structure extrêmement complexe, coûteuse et manque de flexibilité. Par exemple, dans le domaine de l'aéronautique, la constitution d'un lot de plusieurs raidisseurs pour un avion nécessite un très grand nombre de pièces de géométrie très différentes les unes des autres et la machine décrite dans la demande de brevet WO 2005/011961 ne répond pas à ce problème.

La demande de brevet EP 1504880 décrit un procédé de fabrication automatisée d'au moins une pièce allongée à une ou plusieurs couches en matériaux composites à partir d'un moule allongé présentant une forme complémentaire de celle de la pièce à réaliser, le procédé comprend les étapes de
a) déposer par déroulement sur le moule allongé suivant une première direction prédéterminée le long du moule une première couche d'un matériau composite
b) former et compacter suivant la première direction une partie de la première couche de matériau composite au fur et à mesure que cet ensemble est déposé sur le moule afin de conformer partiellement cet ensemble à la forme du moule et
c) former et compacter suivant une seconde direction opposée à la première direction la partie restante déposée tout le long du moule la première couche de matériau composite afin de conformer complètement cet ensemble à la forme du moule.

Elle décrit aussi un dispositif de fabrication automatisée d'au moins une pièce allongée à une ou plusieurs couches en matériaux composites, le dispositif comprend
- une table sur laquelle est positionné un moule allongé présentant une forme complémentaire de celle de chaque pièce à réaliser,
- un portique portant au moins deux actionneurs, l'un des actionneurs étant équipé d'une tête de drapage permettant de déposer sur le moule une couche d'un matériau composite et l'autre actionneur étant équipé d'un outil de compactage, tel qu'un rouleau ou galet, amoviblement fixé à l'actionneur et destiné à former et compacter une partie de l'ensemble à ruban de support et couche de matériau composite déposé sur le moule,
- des moyens permettant un déplacement relatif guidé entre la table équipée de son moule et le portique suivant une direction longitudinale du moule.

L'invention a pour but de palier les inconvénients ci-dessus des différentes techniques connues en proposant un outil industriel flexible pouvant s'adapter à la fabrication d'une grande variété de pièces de structure en matériaux composites et compatible avec les cadences industrielles élevées.

A cet effet, selon l'invention, le procédé de fabrication automatisée d'au moins une pièce allongée à une ou plusieurs couches en matériaux composites à partir d'un moule allongé présentant une forme complémentaire de celle de la pièce à réaliser, est caractérisé en ce qu'il comprend les étapes de a) déposer par déroulement sur le moule allongé suivant une première direction prédéterminée le long du moule une première couche d'un matériau composite accolée à un ruban de support séparable de la première couche, b) former et compacter suivant la première direction une partie de l'ensemble à ruban de support et première couche de matériau composite au fur et à mesure que cet ensemble est déposé sur le moule afin de conformer partiellement cet ensemble à la forme du moule, c) former et compacter suivant une seconde direction opposée à la première direction la partie restante déposée tout le long du moule de l'ensemble à ruban de support et première couche de matériau composite afin de conformer complètement cet ensemble à la forme du moule et ensuite séparer par pelage le ruban de support de la première couche de matériau composite solidarisée au moule par réenroulement du ruban de support suivant la seconde direction.

Le procédé consiste à former et compacter sur le moule la partie de l'ensemble à ruban de support et première couche de matériau composite en passant sur cet ensemble suivant la première direction au moins un outil de compactage, tel qu'un rouleau ou un galet, de forme partiellement complémentaire de celle de moule et à former et compacter sur le moule la partie restante de l'ensemble à ruban de support et première couche de matériau composite en remplaçant automatiquement chaque outil de compactage par un autre outil de compactage, tel qu'un rouleau ou un galet, d'une autre forme partiellement complémentaire de celle du moule et passant cet autre outil de compactage sur cet ensemble suivant la seconde direction.

Le procédé consiste à dérouler l'ensemble à ruban de support et première couche de matériau composite à partir d'une bobine amoviblement fixée à une tête de drapage lors du déplacement relatif entre la tête de drapage et le moule suivant la première direction, la tête comportant un rouleau d'application de cet ensemble sur le moule et à réenrouler sur cette bobine le ruban de support lors du déplacement relatif de la tête de drapage et du moule suivant la seconde direction.

Avant de déposer sur la première couche en matériau composite solidaire du moule un autre ensemble à ruban de support et seconde couche de matériau composite accolée à ce ruban, le procédé consiste à remplacer automatiquement la précédente bobine de la tête de drapage sur laquelle a été réenroulée le précédent ruban par une autre bobine sur laquelle est enroulée le ruban de support et la seconde couche de matériau composite, à remplacer automatiquement l'autre outil de compactage par le précédent et à répéter les différentes étapes précitées a) à c) pour déposer l'autre ensemble à ruban de support et seconde couche de matériau composite sur la première couche en matériau composite du moule et à former et compacter cet ensemble pour le conformer complètement à la forme du moule.

De préférence, le moule est chauffé préalablement avant d'effectuer les étapes précitées a) à c).

Avantageusement, le moule est longitudinalement déplacé sous un portique fixe portant au moins deux actionneurs commandés déplaçables dans l'espace suivant plusieurs degrés de liberté et dont l'un est équipé de la tête de drapage et l'autre est équipé de l'outil de compactage amoviblement fixé à l'actionneur et utilisé pour former et compacter chaque ensemble à ruban de support et couche de matériau composite sur le moule suivant la première direction et qui peut être remplacé par un autre outil de compactage avant de l'utiliser pour former et compacter l'ensemble à ruban de support et couche de matériau composite sur le moule suivant la seconde direction.

L'actionneur équipé de la tête de drapage est déplaçable vers un carrousel pour automatiquement déposer à celui-ci une bobine sur laquelle est réenroulé un ruban de support et prélever sélectivement l'une des bobines portées par le carrousel sur lesquelles sont enroulés respectivement des ensembles à rubans de support et couches de matériaux composites.

Avantageusement, les actionneurs sont constitués par des robots.

La couche de matériau composite accolée au ruban de support de chaque ensemble est prédécoupée à une longueur sensiblement égale à celle du moule allongé.

Le moule présente en section transversale une forme en Té, Oméga, Cé, I, L ou Z.

Le procédé consiste à contrôler séquentiellement de façon synchronisée par une commande numérique les différentes étapes de dépose, de formation, de compactage de chaque ensemble à ruban de support et couche de matériau composite, les changements d'outil de compactage et de bobine de la tête de drapage et le déplacement du moule relativement à la tête de drapage et aux outils de compactage.

L'invention vise également un dispositif de fabrication automatisée d'au moins une pièce allongée à une ou plusieurs couches en matériaux composites et qui est caractérisé en ce qu'il comprend :
- une table sur laquelle est positionné un moule allongé présentant une forme complémentaire de celle de chaque pièce à réaliser,
- un portique portant au moins deux actionneurs commandés à plusieurs degrés de liberté dans l'espace, l'un des actionneurs étant équipé d'une tête de drapage permettant de déposer sur le moule une couche d'un matériau composite accolée à un ruban de support séparable de la couche de matériau composite et l'autre actionneur étant équipé d'un outil de compactage, tel qu'un rouleau ou galet, amoviblement fixé à l'actionneur et destiné à former et compacter une partie de l'ensemble à ruban de support et couche de matériau composite déposé sur le moule,
- des moyens permettant un déplacement relatif guidé entre la table équipée de son moule et le portique suivant une direction longitudinale du moule, et
- l'actionneur à outil de compactage pouvant être commandé pour changer l'outil de compactage par un autre outil de compactage différent après formation et compactage de la partie de l'ensemble à ruban et couche de matériau composite sur le moule par déplacement relatif entre le moule et l'outil de compactage suivant une première direction et avant déplacement relatif entre le moule et l'autre outil de compactage suivant une seconde direction opposée à la première direction pour former et compacter la partie restante de l'ensemble à ruban de support et couche de matériau composite sur le moule.

De préférence, la tête de drapage comprend une bobine amoviblement fixée à la tête et pouvant être entraînée en rotation dans un sens ou dans l'autre par un moteur commandé, sur laquelle bobine est enroulé un ensemble à ruban de support et couche de matériau composite pouvant être déroulé de la bobine lorsqu'elle est entrainée en rotation dans un sens déterminé par le moteur, et un rouleau permettant d'appliquer et de déposer cet ensemble sur le moule lors de son déroulement de la bobine et lorsque la table est déplacée relativement au portique suivant la première direction, la bobine pouvant être entrainée en rotation en sens inverse par le moteur pour réenrouler le ruban de support et le séparer de la couche de matériau composite déposée sur le moule lorsque la table est déplacée relativement au portique suivant la seconde direction.

La tête de drapage comprend en outre, disposée à proximité de la bobine, une plaque creuse formant couloir de guidage de l'ensemble à ruban de support et couche de matériau composite vers le rouleau d'application lors du déplacement de cet ensemble de la bobine ou du ruban de support vers la bobine lors du réenroulement de ce ruban, et deux rouleaux moletés motorisés de guidage disposés entre la plaque de guidage et le rouleau d'application.

Avantageusement, la plaque de guidage est en forme d'entonnoir dont la grande ouverture est adjacente à la bobine et est montée à pivotement commandé par un moteur relativement à la tête de drapage entre une position dégagée permettant la fixation d'une bobine à cette tête et sa position de guidage.

Le dispositif comprend en outre, situé à proximité du portique, un carrousel de stockage de bobines sur chacune desquelles est préalablement enroulé un ensemble à ruban de support et couche de matériau composite et l'actionneur à tête de drapage peut être commandé pour saisir et fixer amoviblement l'une choisie des bobines du carrousel à la tête de drapage.

Les moyens de fixation amovible d'une bobine à la tête de drapage comprennent un embout tronconique solidaire d'un axe de support de la bobine et un fourreau tronconique monté à rotation à la tête de drapage sur la commande d'un moteur et dans lequel peut être accouplé amoviblement l'embout tronconique.

Le dispositif comprend également deux unités de stockage et d'outils de compactage situées au voisinage de chaque extrémité du portique et chaque actionneur à outil de compactage peut être commandé pour automatiquement déposer à l'une des unités de stockage un outil de compactage et saisir à cette unité un autre outil de compactage.

De préférence, les moyens de déplacement permettent de déplacer en translation guidée la table et son moule sous le portique fixe suivant la direction longitudinale du moule.

Ces moyens de déplacement comprennent avantageusement un pignon motorisé solidaire de la table en engrènement sur une crémaillère fixe s'étendant parallèlement à la direction longitudinale du moule allongé et au moins un rail de guidage fixe parallèle à la crémaillère et sur lequel peut se déplacer la table de support du moule.

La table supporte un plateau chauffant sur lequel est disposé le moule allongé.

Les actionneurs sont constitués par des robots à poignets articulés portant la tête de drapage et les outils de compactage.

Le dispositif comprend de préférence une commande numérique permettant de commander de manière synchronisée et coordonnée les actionneurs à tête de drapage et outils de compactage, les déplacements relatifs entre la table de support du moule allongé et le portique, les changements d'outils de compactage et de bobine de la tête de drapage et les moteurs d'entrainement à rotation de la bobine de la tête de drapage dans les sens d'enroulement et de déroulement, de pivotement de la plaque de guidage et des rouleaux moletés de guidage de cette tête.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :

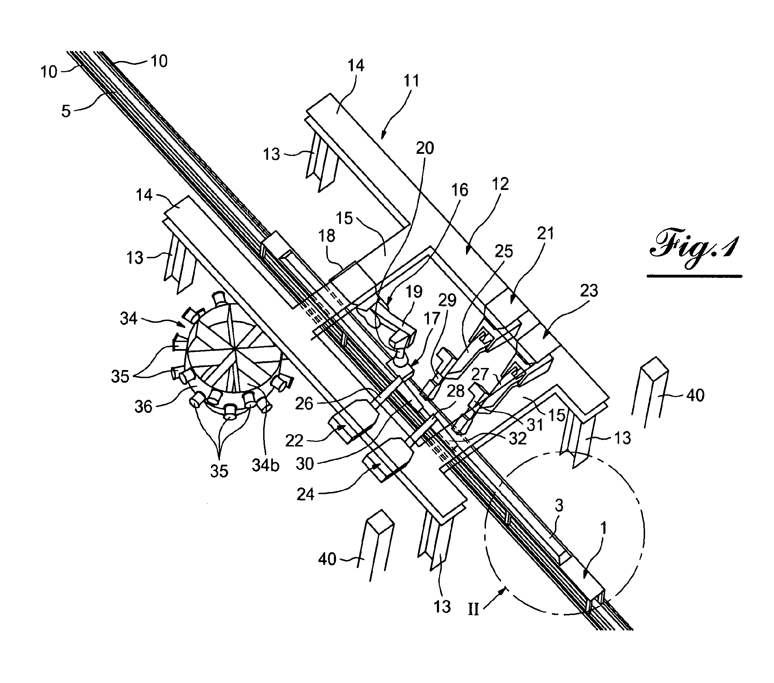

- la figure 1 est une vue en perspective de dessus du dispositif de l'invention permettant de fabriquer de façon automatisée des pièces rigides allongées en matériaux composites ;
- la figure 2 est une vue en perspective agrandie de la partie cerclée en II de la figure 1 et représentant les moyens de déplacement de la table de support du moule de réalisation d'une pièce ;

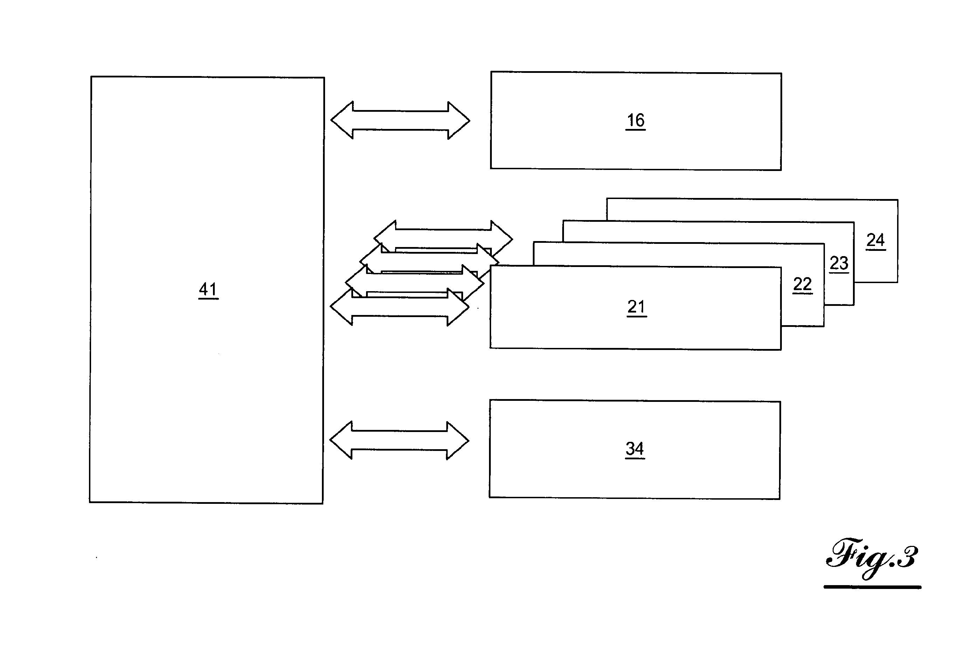

- la figure 3 est une vue schématique de la commande numérique utilisée pour commander séquentiellement et de façon synchronisée les différents éléments équipant le dispositif de la figure 1 ;

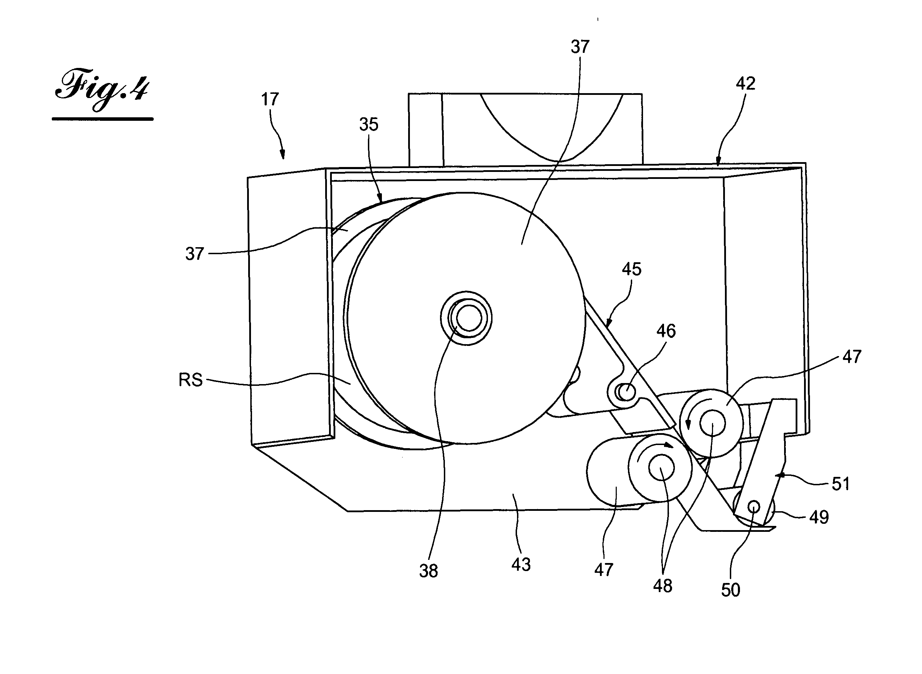

- la figure 4 est une vue en perspective agrandie d'une tête de drapage conforme à l'invention ;
- la figure 5 est une vue en perspective représentant un changement de bobine de la tête de drapage de la figure 4 portée par un bras de robot ;
- la figure 6A à 6E représente le dispositif de l'invention à différentes étapes de réalisation d'une pièce allongée en matériau composite ; et
- la figure 7 représente schématiquement le positionnement des outils pour un cycle complet de drapage et de compactage d'une pièce allongée à profil en oméga.

Le dispositif de l'invention va être décrit dans la réalisation automatisée de raidisseurs rectilignes en matériaux composites à section transversale en oméga pour des avions, mais il est bien entendu qu'il peut s'appliquer à la fabrication de pièces de structure à matériaux composites utilisées dans d'autres domaines que celui de l'aéronautique et présentant des formes courbes et d'autres profils par exemple en Cé, Té, I, L, Z.

Chaque raidisseur est réalisé en déposant automatiquement sur un moule une ou plusieurs couches de fibres à partir d'un ruban composite constitué d'éléments de fibres, par exemple à base de carbone, encollées par imprégnation d'une résine thermodurcissable ou thermoplastique et accolé à un ruban de support en papier ou en film plastique.

En se reportant aux figures, le dispositif de l'invention comprend une table allongée 1 sur laquelle est monté un plateau chauffant 2 s'étendant pratiquement sur toute la longueur de la table 1.

Un moule allongé 3 présentant en section transversale une forme complémentaire de celle du raidisseur à réaliser en oméga, est fixé sur le plateau chauffant 2 le long de celui-ci.

La table 1 est disposée horizontalement et comporte une pluralité de paires de pieds de support 4, régulièrement espacées le long de la table 1 qui peut être déplacée en translation rectiligne avec précision suivant sa direction longitudinale par tout moyen approprié.

Comme représenté, les moyens de déplacement de la table 1 comprennent une crémaillère 5 fixée au sol sous la table 1 et un pignon 6 porté par la table 1 en étant en engrènement sur la crémaillère 5.

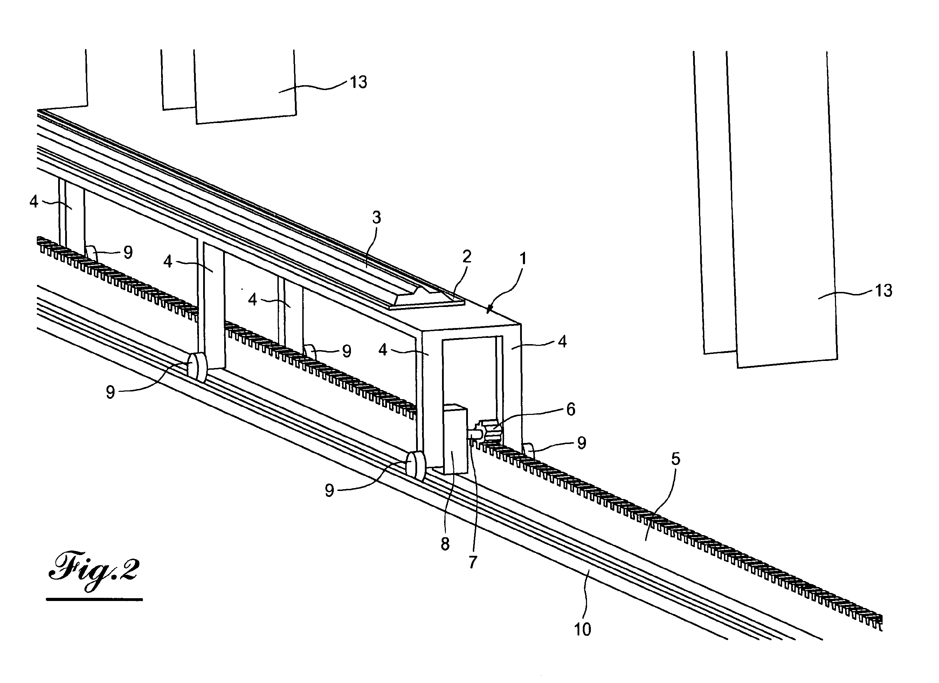

Le pignon 6 est porté par un arbre 7 solidaire de l'arbre moteur d'un moteur électrique 8 fixé à la table 1. Comme le montre mieux la figure 2, le moteur électrique est solidaire d'un pied 4 de l'une des paires dans le cas présent la paire avant de la table 1. Cependant, l'ensemble à pignon 6 et moteur électrique 8 peut être fixé à l'une des autres paires de pieds de support 4 de la table 1.

Les pieds de support 4 de chaque paire comportent à chacune de leurs extrémités une roue verticale 9 montée librement à rotation autour d'un axe horizontal solidaire du pied. Les deux roues de chaque paire de pieds 4 sont montées respectivement dans deux rails de guidage 10 solidaires du sol en étant disposés de part et d'autre de la crémaillère 5 parallèlement à celle-ci. Chaque rail de guidage 10 peut être constitué par un profilé à section transversale en U ouvert vers le haut.

La crémaillère S et les rails de guidage 10 ont une longueur supérieure à celle de la table 1 de façon à s'étendre au-delà de la table 1 à chacune de ses extrémités.

Le dispositif de l'invention comprend en outre un portique fixe 11 disposé au-dessus de la crémaillère 5 et des rails 10 et qui porte plusieurs actionneurs, tels que des robots, ayant un ou plusieurs degrés de liberté dans l'espace et qui seront décrits ultérieurement.

Le portique 11 comprend une structure supérieure horizontale 12 portant les différents actionneurs et des pieds verticaux 13 de support de la structure 12 fixés au sol.

La structure 12 du portique 11 peut être constituée par deux longerons 14 s'étendant parallèlement aux rails de guidage 10 de part et d'autre de ceux-ci et au moins deux traverses 15 disposées entre les deux longerons 14 perpendiculairement à ceux-ci. Les pieds de support 13 sont dans le cas présent au nombre de quatre et fixés à chacune des extrémités des longerons 14 de la structure de support 12.

Le portique 11 porte un premier robot 16 équipé d'une tête de drapage 17 destinée à déposer plusieurs couches de matériaux composites et qui est fixé sous l'une des traverses 15 de la structure porteuse 12. Le robot 16 comprend un corps 18 fixé à la traverse 15 et un bras mobile 19 à poignet d'extrémité 20 portant la tête de drapage 17. Les articulations du bras 19 et du poignet 20 du robot 16 sont telles que la tête de drapage peut être déplacée en toute direction dans l'espace de manière à positionner précisément la tête de drapage 17 relativement au moule allongé 3 pour déposer sur celui-ci différentes couches de matériaux composites constituant le raidisseur à réaliser.

Le portique 11 porte également plusieurs autres robots 21-24, par exemple au nombre de quatre, pouvant être équipés d'outils amovibles pour former et compacter des couches de matériaux composites le long du moule allongé 3. Chaque robot 21-24 comprend un bras articulé 25-28 à poignets 29-32 portant un outil de formage et de compactage de couches de matériaux composites, chaque outil étant amoviblement fixé à l'extrémité du poignet correspondant du robot 21-24 afin d'être remplacé par un autre outil de formage et de compactage différent comme on le verra ultérieurement. Les articulations des poignets et des bras des robots 21-24 sont telles qu'elles autorisent aux outils de formage et de compactage 33 qu'ils portent plusieurs degrés de liberté dans l'espace permettant à ces outils d'être positionnés relativement à certaines parties du moule allongé 3.

Les moyens permettant de fixer amoviblement chaque outil de formage et de compactage 33 au poignet correspondant du robot 21-24 sont connus en soi dans le domaine de la robotique et n'ont pas à être détaillés.

Chaque outil de compactage 33 est connu en soi et peut être constitué par un rouleau, un galet, une brosse ou un patin.

Le dispositif de l'invention comprend également un carrousel 34 auquel sont stockées des bobines 35 sur chacune desquelles est enroulé une nappe ou un ensemble à ruban de support RS auquel est accolé un ruban de matière préimprégnée RM destiné à former une couche de matériau composite du raidisseur.

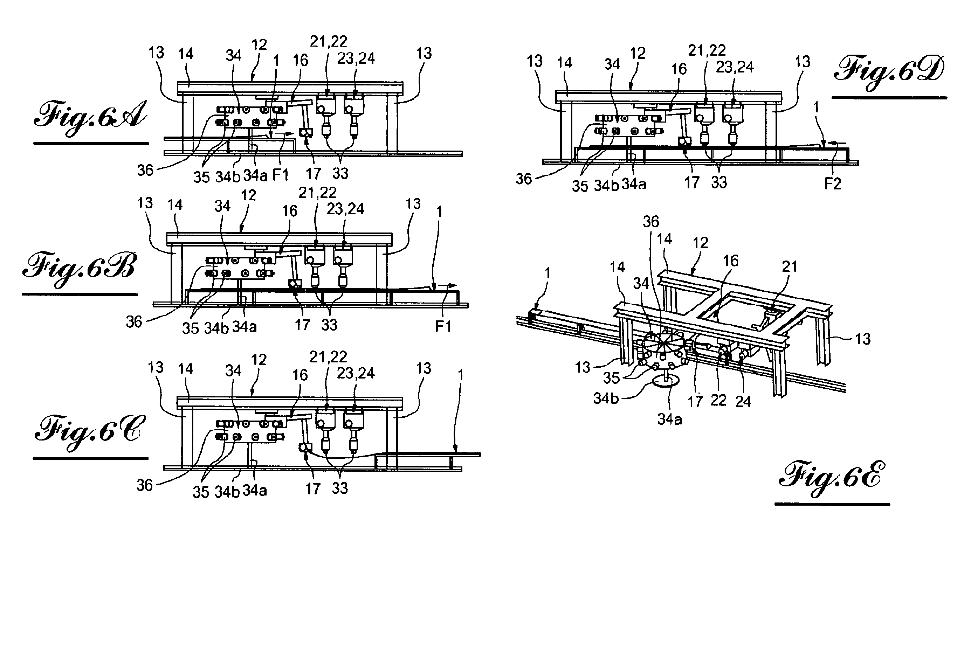

Le carrousel 34 peut être constitué par exemple par une roue horizontale 36 à rayons pouvant être entrainée en rotation autour d'un axe vertical par un moteur électrique, non représenté, et les différentes bobines sont amoviblement fixées à la face externe périphérique de la roue 36. Comme cela ressort mieux des figures 6A à 6E, la roue 36 du carrousel 34 est montée à rotation sur un pied vertical 34a fixé au sol par l'intermédiaire d'une embase 34b.

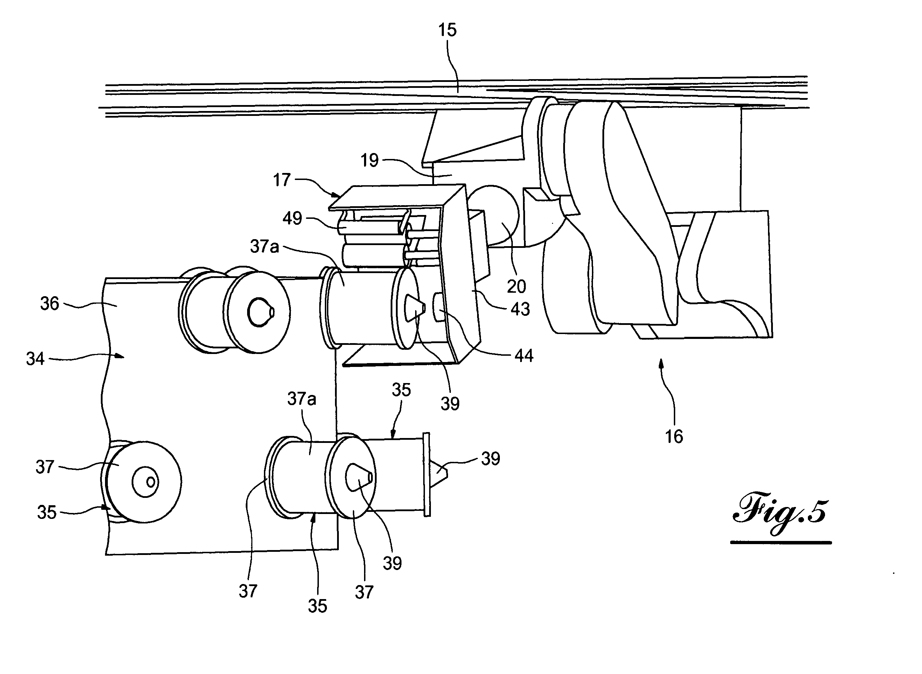

Chaque bobine 35 est amoviblement fixée à la roue 36 par tout moyen approprié. Par exemple, chaque bobine 35 peut être enfilée à faible jeu sur un axe cylindrique, non représenté, solidaire de la roue 36 en faisant saillie radialement de celle-ci de façon que la bobine puisse être extraite par glissement serré de cet axe. Chaque bobine 35 comporte un moyeu cylindrique 37a et deux flasques circulaires parallèles 37 fixés aux extrémités du moyeu 36. En outre, chaque bobine 35 est solidaire d'un arbre creux 38 dont une extrémité comporte un embout tronconique 39 et l'extrémité opposée permet à la bobine 35 d'être enfilée sur son axe de support correspondant de la roue 36 du carrousel 34. Comme le montre la figure 5, en position de stockage des bobines 35 au carrousel 34, les extrémités tronconiques 39 de l'arbre creux 38 font saillie extérieurement du flasque correspondant 37 de la bobine et sont donc accessibles extérieurement au carrousel 34.

Le robot 16 peut être commandé pour permettre à la tête de drapage 17 de déposer sur le carrousel 34 une bobine 35 sur laquelle n'est enroulé que le ruban de support RS débarrassé de son ruban de matière RM et saisir une autre bobine sur laquelle est enroulé un ensemble à ruban de support RS et ruban de matière RM pour une nouvelle séquence de dépose d'un pli de matière sur le moule allongé 3.

Le dispositif de l'invention comprend en outre deux unités 40 de préférence situées à deux extrémités d'un même côté du portique 11 et sur chacune desquelles sont stockés des outils de formage et de compactage 33 de formes différentes et complémentaires à certaines des parties du moule allongé 3. Les robots 21 à 24 peuvent être commandés lors des différentes séquences de formage et de compactage des rubans de matière RM sur le moule allongé 3 pour déposer sur l'une appropriée des unités 40 les outils de formage et de compactage 33 précédemment utilisés et saisir de nouveaux outils de formage et de compactage 33 pour réaliser une nouvelle opération de formage et de compactage des rubans de matière RM sur la partie correspondante du moule allongé 3.

Le dispositif de l'invention comprend enfin une commande numérique 41 pouvant être constituée par un dispositif à ordinateur et permettant de faire fonctionner de façon synchronisée et coordonnée notamment les différents robots 16, 21-24 et les mouvements de la table 1 relativement au portique fixe 11 et du carrousel 34 pour réaliser un raidisseur. Ainsi, la commande numérique 41 est programmée spécifiquement pour chaque type de raidisseur à réaliser.

La tête de drapage 17 comprend un boîtier ou corps 42 de forme générale parallélépipédique ouvert partiellement pour permettre le retrait d'une bobine 35 de cette tête après dépose et compactage du ruban de matière RM sur le moule allongé 3 et son remplacement par une nouvelle bobine à ruban du support RS et ruban de matière RM pour dépôt d'un nouveau pli de matière composite sur le pli précédemment déposé et compacté sur le moule 3.

A cet effet, l'une 43 des parois du boîtier 42 de la tête de drapage 17 comporte un fourreau intérieurement tronconique 44 de forme complémentaire à celle de l'embout 39 de la bobine 35 et qui est monté à rotation relativement au boîtier 42 par un moteur électrique, non représenté, pouvant être solidaire du boîtier 42 de la tête de drapage 17. De la sorte, lorsque le robot 16 est commandé pour disposer la tête de drapage 17 de façon que le fourreau tronconique 34 soit en regard d'un embout tronconique 39 d'une bobine choisie 35, le bras 19 du robot 16 est déplacé pour introduire l'embout tronconique 39 de la bobine 35 dans le fourreau 44 afin d'accoupler amoviblement la bobine 35 dans le boîtier 42 de la tête de drapage 17. La bobine 35 peut alors être entrainée en rotation dans un sens ou dans le sens opposé par le moteur électrique associé pour dérouler de la bobine 35 l'ensemble à ruban du support RS et ruban de matière composite RM sur le moule allongé 3 le long de celui-ci et réenrouler seulement sur la bobine 35 le ruban de support RS comme cela sera expliqué ultérieurement.

Dans le boîtier 42 de la tête de drapage 17 est également fixée une plaque creuse 45 pouvant basculer sous la commande d'un moteur électrique, non représenté, pouvant être solidaire du boîtier 42, autour d'un axe 46 solidaire de la face interne de la paroi 43 perpendiculairement à cette dernière. Ainsi, la plaque 45 peut pivoter entre une position dégagée de la bobine 35 pour permettre son retrait de la tête de drapage 17 et la fixation d'une autre bobine 35 à cette tête et sa position formant couloir de guidage.

La plaque mobile creuse 45 présente de préférence une forme en entonnoir dont la grande ouverture de section transversale rectangulaire est adjacente à la bobine 35 en étant disposée entre les deux flasques 37 de la bobine et la petite ouverture opposée de section transversale rectangulaire est située en regard des deux rouleaux moletés parallèles 47 portés par deux axes 48 solidaires de la face interne de la paroi 43 du boîtier 42 et pouvant être entrainés en rotation par un moteur électrique non représenté de façon à entrainer en sens contraires les deux rouleaux moletés 47.

Le boîtier 42 de la tête de drapage 17 comprend en outre un rouleau 49 d'application de l'ensemble à ruban de support RS et ruban de matériau composite RM sur le moule allongé 3 ou sur une couche de matériau composite précédemment déposée sur ce moule et qui est situé au voisinage des deux rouleaux moletés 47 à l'opposé de la plaque pivotante 45. Le rouleau d'application 49 est monté fou sur un axe 50 fixé à une chape 51 solidaire de l'une des parois 44 du boîtier 42 perpendiculaire à la paroi 43 de manière que le rouleau s'étende parallèlement aux deux rouleaux moletés de guidage 47.

La plaque creuse 45 sert de couloir de guidage soit de l'ensemble à ruban de support RS et ruban de matière composite RM vers le rouleau d'application 49 au travers des deux rouleaux moletés 47 lors du déroulement de cet ensemble de la bobine 35, soit du ruban de support seul RS vers la bobine 35 lors du réenroulement de ce ruban.

Les différents moteurs électriques associés à la tête de guidage 17 permettant l'entrainement d'une bobine 35, des rouleaux moletés 37 et le pivotement de la plaque 45 formant couloir de guidage sont commandés de façon synchronisée et coordonnée par la commande numérique 41. En variante, il est possible de prévoir un seul moteur électrique qui, par l'intermédiaire d'un mécanisme d'entraînement approprié, puisse assurer l'entrainement de la bobine 35 et des deux rouleaux moletés 47.

En outre, le rouleau d'application 49 de la tête de drapage 17 présente également une fonction de compactage de l'ensemble à ruban de support RS et ruban de matière composite RM sur une partie du moule allongé 3 ou sur une partie d'une couche de matière composite précédemment déposée.

Avantageusement, le ruban de matériau composite RM accolé au ruban de support RS est prédécoupé sur une longueur sensiblement égale à la longueur du moule allongé 3 à partir duquel doit être réalisé un raidisseur.

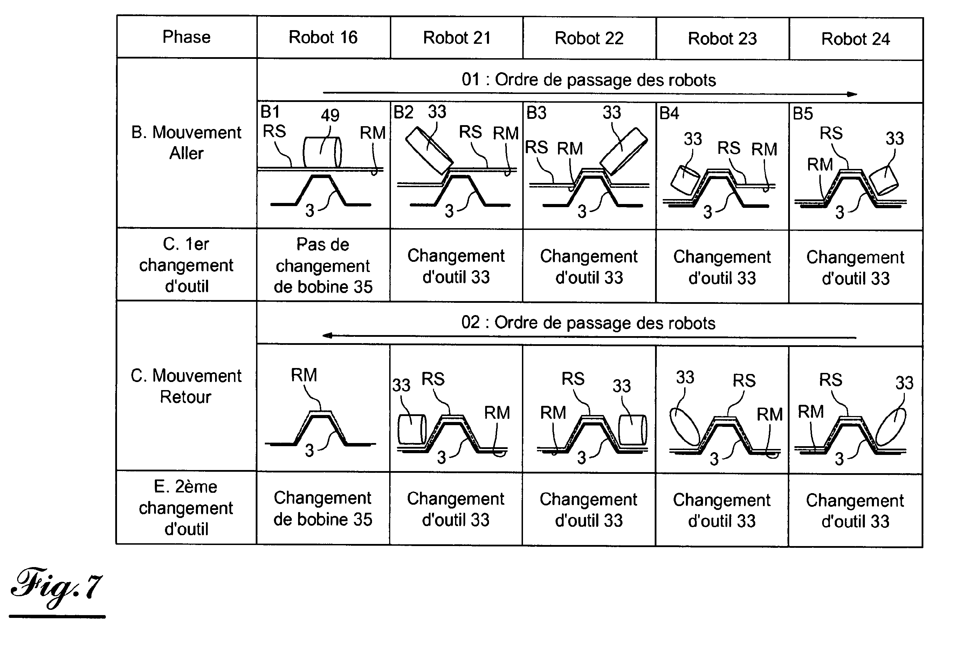

Une séquence ou cycle de drapage et de compactage d'une couche de matériau composite sur le moule allongé 3 va être décrit en référence aux figures 6A à 6E et 7 dans le cas du moule 3 présentant un profil en oméga pour la réalisation d'un raidisseur de profil conjugué.

La première phase de ce cycle consiste tout d'abord, à une position de la table mobile 1 en dehors du portique 11, à fixer le moule 3 sur le plateau chauffant 2 solidaire de la table 1 afin que le moule soit chauffé et porté à une température prédéterminée.

La seconde phase du cycle, représentée aux figures 6A, 6B et en B de la figure 7, consiste à commander le moteur électrique 8 de la table 1 pour déplacer celle-ci en translation par l'ensemble à pignon et crémaillère 5, 6 dans le sens indiqué par la flèche F1 de façon que le moule 3 puisse passer sous le portique 11 et successivement sous le robot 16 portant la tête de drapage 17 et les différents robots 21 à 24 portant différents outils de formage et de compactage 33 suivant l'ordre de passage de ces robots indiqué par 01 en figure 7. Plus précisément, quand le moule 3 passe sous la tête de drapage 17 positionnée préalablement par le robot 16, la tête 17 dépose sur la surface supérieure plane du moule 3 un premier ensemble à ruban de support RS et ruban de matière composite RM par déroulement de cet ensemble par rotation de la bobine 35 par son moteur d'entraînement dans le sens coordonné avec la direction de déplacement de la table 1 suivant la flèche F1, avec le rouleau d'application 49 de la tête 17 compactant cet ensemble sur la surface plane supérieure du moule 3 le long de celui-ci comme représenté en B1 en figure 7. Ensuite, lors du passage du moule 3 sous les différents outils 33 portés par les robots 21 à 24 et ce dans l'ordre de passage 01 de ces robots, l'ensemble à rubans RS et RM déposé sur la surface supérieure du moule 3 est formé et compacté sur une partie du moule 3 comme représenté en B2, B3, B4 et B5 du déplacement aller suivant la direction F1 de la table 1. Ainsi, comme représenté en B2 du mouvement aller de la phase B, l'outil 33 porté par le robot 21 accomplit le formage et le compactage de l'ensemble à rubans RS et RM sur l'un des angles supérieurs du profilé en oméga du moule 3 le long de celui-ci puis, comme représenté en B3, l'outil 33 du robot suivant 22 compacte cet ensemble en appliquant une pression sur l'angle supérieur opposé du profilé en oméga du moule 3 le long de celui-ci. Ensuite comme représenté en B4, l'outil 33 porté par le robot suivant 23 effectue un compactage par pression de l'ensemble à rubans RS et RM sur l'un des côtés obliques du profilé en oméga du moule 3 le long de celui-ci et, comme représenté en B5, l'outil 33 porté par le robot suivant 24 effectue le compactage par pression de cet ensemble sur le côté opposé incliné du moule 3 le long de celui-ci. Bien entendu, les robots 21 à 24 ont été commandés par la commande numérique 41 pour positionner les différents outils 33 relativement au moule allongé 3 à la manière représentée en B2, B3, B4 et B5. Ainsi, lorsque le moule 3 est passé sous le dernier robot 24, l'ensemble à rubans RS et RM est conformé et compacté tout le long de ce moule sur la surface supérieure et les deux côtés opposés du profil en oméga de ce moule comme représenté en B5 de la figure 7.

Suivant la troisième phase de ce cycle, une fois la table 1 et le moule 3 passés entièrement sous le portique 11 et que l'ensemble à rubans RS et RM à été déposé sur le moule 3 comme représenté en figure 6C, le déplacement de la table 1 est arrêté. A ce moment là, la commande numérique 41 commande les robots 21 à 24 pour qu'ils changent d'outils de compactage comme indiqué par la phase C en figure 7 en les amenant à déposer tout d'abord les outils de compactage précédent à l'unité correspondante 40 et à saisir à cette unité les nouveaux outils de compactage et ce de façon automatique. La figure 6C montre que jusqu'à l'arrêt de la table relativement au portique 11, la tête de drapage 17 a continué de dérouler de sa bobine 35 le ruban de support RS au-delà du moule 3, le ruban de matière composite ayant été déposé sur toute la longueur du moule 3 puisque prédécoupé à la longueur de ce moule et ce afin de pouvoir rembobiner le ruban de support RS lors du mouvement de retour de la table 1 suivant la direction F2 opposée à la direction précédente F1.

L'étape suivante du cycle de drapage et de compactage consiste à commander, par la commande numérique 41, le déplacement de la table 1 sous le portique 11 dans le sens de la flèche F2 opposé au sens précédent F1 et à positionner les robots 21 à 24 ainsi que leurs nouveaux outils de compactage 33 relativement au moule 3 de façon à faire passer l'ensemble à rubans de support RS et de matière composite RM précédemment partiellement compacté successivement sous les robots 24 à 21 dans l'ordre de passage 02 indiqué en phase D du mouvement de retour de la table 1 en figure 7. De la sorte, les nouveaux outils de compactage 33 de ces robots effectivement le compactage de l'ensemble à rubans de support et de matière composite RS et RM sur les angles inférieurs opposés et sur les parois latérales opposées de base du profilé en oméga du moule 3 tout le long de ceux-ci. En outre, lorsque cet ensemble passe sous la tête de compactage 17 préalablement positionnée relativement au moule 3 par le robot 16 commandé par la commande numérique 41, la bobine 35 de cette tête est entrainée par son moteur également commandé par la commande numérique 41 dans le sens assurant le réenroulement synchronisé avec le déplacement de la table 1 du ruban de support RS autour de la bobine 35, ce ruban étant séparé par pelage de la couche de matériau composite du moule 3 compactée sur le moule pour en épouser son profil en oméga. Ces étapes de compactage de l'ensemble à rubans de support RS et de matériau composite RM par les outils 33 des robots 24 à 21 et de rembobinage du ruban de support RS sur la bobine 35 de la tête de drapage 17 sont représentées en figure 6D. La phase suivante du cycle de drapage et de compactage représentée en figure 6E et en E de la figure 7 est celle où la table 1 est repassée sous le portique 11 et revenue à sa position initiale de la figure 6A à laquelle la couche de matériau composite a été complètement compactée sur toute la longueur du moule 3 pour en épouser son profil. En outre, le robot 16 est commandé par la commande numérique 41 afin de déplacer la tête de drapage 17 pourvue de sa bobine 35 sur laquelle a été complètement rembobiné le ruban de support RS vers le carrousel 34 afin que la tête de drapage 17 puisse déposer cette bobine sur un axe libre correspondant du carrousel et ensuite saisir une autre bobine à ensemble à rubans de support et matériau composite RS et RM pour charger cette nouvelle bobine dans la tête de drapage 17. Simultanément, les robots 21 à 24 sont commandés par la commande numérique 41 afin qu'ils déposent sur l'autre unité 40 les outils de compactage 33 utilisés lors la phase D du mouvement de retour de la table 1 et reprennent les outils de compactage 33 utilisés lors du mouvement aller de la phase B. Une fois ces opérations effectuées, le dispositif est prêt pour déposer et compacter un nouveau pli de matière composite sur le premier pli précédemment déposé et compacté sur le moule 3.

Les phases B à E du cycle de dépose et de compactage précédemment décrites sont répétées pour tous les plis de matières qui doivent être déposés et compactés sur chaque pli de matière précédemment déposé et compacté sur le moule 3.

Une fois tous les plis déposés et compactés sur le moule 3, ce dernier est transféré à d'autres postes de travail afin de réaliser les opérations suivantes habituelles du cycle de fabrication des raidisseurs telles que mise sous vide, cuisson en autoclave, etc...

Comme cela ressort de ce qui précède, chaque séquence de drapage et de compactage de plis de matières composites sur le moule correspondant est réalisée entièrement automatiquement, seules des opérations manuelles étant réalisées en amont de cette séquence pour notamment préparer les bobines à ensembles à rubans de support et rubans de matières RS et RM.

Par ailleurs, la tête de drapage 17 est spécialement conçue pour assurer l'automatisation complète des séquences de drapage et de compactage précédemment décrites.

Ainsi, la tête de drapage 17 accomplit les fonctions suivantes de :
- déposer chaque ruban de matière préimprégnée avec son ruban de support sur le moule. Dans une tête de drapage classique, le ruban préimprégné est d'abord séparé de son ruban de support au moyen d'un séparateur avant d'être déposé sur le moule. Dans la tête de drapage de l'invention, le ruban préimprégné est déposé avec son ruban de support sur le moule et le compactage par les galets ou rouleaux de compactage 33 est effectué sur le ruban de support et non directement sur le ruban préimprégné ;
- rembobiner le film ou ruban de support. Contrairement à une tête de drapage classique, il n'y a pas de dispositif de coupe du ruban préimprégné. En effet, une fois que la table 1 est entièrement passée sous le robot 16 à tête de drapage 17, la tête continue, par son moteur d'entraînement de la bobine, à dérouler uniquement le ruban de support jusqu'à ce que la table soit entièrement passée sous les robots de compactage 21 à 24. Quand la table est déplacée en sens inverse relativement au portique 11, la bobine 35 de la tête de drapage 17 réenroule le ruban de support RS pour assurer le détachement progressif par pelage de ce ruban de matière composite à draper sur le moule. Cette conception de tête de drapage évite ainsi toute opération manuelle ; et
- charger automatiquement les bobines à rubans de support et de matière composite dans la tête de drapage 17. Dans le processus de fabrication de chaque raidisseur, il doit y avoir une bobine par pli de matériau composite à draper sur le moule. Il est par conséquent nécessaire de recharger la tête de drapage en nouvelle bobine à ensemble à ruban de support et ruban de matière composite avant de déposer et compacter le pli de matière sur le moule. Cette opération est effectuée de façon automatique afin de ne pas interrompre ce processus de fabrication par une opération manuelle, en stockant les bobines 35 dans le carrousel 34 qui contient ainsi l'ensemble des bobines nécessaires pour la fabrication d'un raidisseur. Comme déjà expliqué précédemment, le mouvement de ce carrousel est piloté par la commande numérique 41, ce qui permet au robot de drapage 16 de se positionner aux deux emplacements du carrousel, l'un pour décharger chaque bobine utilisée et l'autre pour charger chaque nouvelle bobine dans la tête de drapage. La tête de drapage dispose des moyens décrits précédemment pour décrocher et saisir les bobines. Lors de l'opération de déchargement et de chargement d'une bobine, la plaque 45 formant couloir de guidage est commandée pour pivoter dans un sens la dégageant complètement de l'emplacement prévu de la bobine. Une fois une bobine déchargée de la tête de drapage 17 et remplacée par une autre, la plaque 45 est amenée à sa position entre les deux flasques 37 de la nouvelle bobine 35 de façon que, par rotation commandée de la bobine 35 dans le sens approprié, l'amorce de l'ensemble à ruban de support et ruban de matière composite RS et RM puisse s'engager automatiquement dans l'extrémité correspondante de la plaque 35 formant couloir de guidage pour assurer ainsi automatiquement le guidage de cet ensemble vers le rouleau ou galet d'application et de compactage 49 de la tête de drapage 17 au travers des rouleaux moletés 47.

Bien entendu, le dispositif robotisé ci-dessus décrit pour fabriquer des pièces en matériaux composites peut être utilisé pour la réalisation de tout type de profils de pièces qui peuvent être rectilignes ou courbées. En outre, le dispositif de l'invention peut également fonctionner en déplaçant le portique 11 de support des robots de drapage de compactage relativement à la table fixe.

Ce dispositif de fabrication automatisé de pièces allongées en matériau composite telles que raidisseurs, présente les avantages suivants :
- un accès simplifié à la table de support du moule, lorsque son déplacement est arrêté,
- un temps de cycle de drapage et de compactage optimisé grâce à l'utilisation des déplacements de la table et de son moule dans les sens opposés pendant lesquels sont effectuées les opérations de drapage et de compactage sans temps mort ;
- une automatisation complète du procédé de drapage et de compactage grâce au rembobinage du ruban de support, au changement automatique de bobine de la tête de drapage et des outils de compactage ;
- une adaptation du dispositif à différentes géométries des pièces à réaliser, avec les mouvements des bras des robots sur différents axes et les changements automatiques d'outils de compactage, dispositif pouvant être ainsi adapté à une large gamme de pièces qui diffèrent par la forme de leurs sections (Cé, Té, delta, oméga, Z...) et par la géométrie d'ensemble de ces pièces ;
- en outre, cette adaptation peut être effectuée rapidement grâce au moyen de changement automatique d'outils et à la programmation par commande numérique de l'ensemble du dispositif. Ceci se traduit par conséquent par un atelier flexible de fabrication pouvant être reconfiguré très rapidement afin de fabriquer une large gamme de pièces différentes dans un temps de cycle extrêmement réduit.

## Revendications

1. Procédé de fabrication automatisée d'au moins une pièce allongée à une ou plusieurs couches en matériaux composites à partir d'un moule allongé (3) présentant une forme le procédé complémentaire de celle de la pièce à réaliser, le procédé comprend les étapes de a) déposer par déroulement sur le moule allongé (3) suivant une première direction prédéterminée le long du moule (3) une première couche d'un matériau composite (RM) accolée à un ruban de support (RS) séparable de la première couche, b) former et compacter suivant la première direction une partie de l'ensemble à ruban de support (RS) et première couche de matériau composite (RM) au fur et à mesure que cet ensemble est déposé sur le moule (3) afin de conformer partiellement cet ensemble à la forme du moule, c) former et compacter suivant une seconde direction opposée à la première direction la partie restante déposée tout le long du moule (3) de l'ensemble à ruban de support (RS) et première couche de matériau composite (RM) afin de conformer complètement cet ensemble à la forme du moule (3) et ensuite séparer par pelage le ruban de support (RS) de la première couche de matériau composite (RM) solidarisée au moule (3) par réenroulement du ruban de support (RS) suivant la seconde direction.

2. Procédé selon la revendication 1, **caractérisé en ce qu'**il consiste à former et compacter sur le moule (3) la partie de l'ensemble à ruban de support (RS) et première couche de matériau composite (RM) en passant sur cet ensemble suivant la première direction au moins un outil de compactage (33), tel qu'un rouleau ou un galet, de forme partiellement complémentaire de celle du moule (3) et à former et compacter sur le moule (3) la partie restante de l'ensemble à ruban de support (RS) et première couche de matériau composite (RM) en remplaçant automatiquement chaque outil de compactage (33) par un autre outil de compactage (33), tel qu'un rouleau ou un galet, d'une autre forme partiellement complémentaire de celle du moule (3) et passant cet autre outil de compactage (33) sur cet ensemble suivant la seconde direction.

3. Procédé selon la revendication 1 ou 2, **caractérisé en ce qu'**il consiste à dérouler l'ensemble à ruban de support (RS) et première couche de matériau composite (RM) à partir d'une bobine (35) amoviblement fixée à une tête de drapage (17) lors du déplacement relatif entre la tête (17) et le moule (3) suivant la première direction, la tête (17) comportant un rouleau d'application (49) de cet ensemble sur le moule, (3) et à réenrouler sur cette bobine (35) le ruban de support (RS) lors du déplacement relatif de la tête de drapage (17) et du moule (3) suivant la seconde direction.

4. Procédé selon la revendication 3, **caractérisé en ce qu'**il consiste, avant de déposer sur la première couche en matériau composite solidaire du moule (3) un autre ensemble à ruban de support (RS) et seconde couche de matériau composite (RM) accolée à ce ruban, à remplacer automatiquement la précédente bobine (35) de la tête de drapage (17) sur laquelle a été réenroulée le précédent ruban par une autre bobine (35) sur laquelle est enroulée le ruban de support (RS) et la seconde couche de matériau composite (RM), à remplacer automatiquement l'autre outil de compactage (33) par le précédent et à répéter les différentes étapes a) à c) pour déposer l'autre ensemble à ruban de support (RS) et seconde couche de matériau composite (RM) sur la première couche en matériau composite du moule (3) et à former et compacter cet ensemble pour le conformer complètement à la forme du moule (3).

5. Procédé selon l'une des revendications précédentes, **caractérisé en ce qu'**il consiste à chauffer préalablement le moule (3) avant d'effectuer les étapes a) à c) précitées.

6. Procédé selon l'une des revendications 2 à 5, **caractérisé en ce qu'**il consiste à déplacer longitudinalement le moule (3) sous un portique fixe (11) portant au moins deux actionneurs commandés (16 ; 21-24) déplaçables dans l'espace suivant plusieurs degrés de liberté et dont l'un (16) est équipé de la tête de drapage (17) et l'autre (21-24) est équipé de l'outil de compactage (33) amoviblement fixé à l'actionneur (21-24) et utilisé pour former et compacter chaque ensemble à ruban de support et couche de matériau composite sur le moule (3) suivant la première direction et qui peut être remplacé par un autre outil de compactage (33) avant de l'utiliser pour former et compacter l'ensemble à ruban de support et couche de matériau composite sur le moule (3) suivant la seconde direction.

7. Procédé selon la revendication 6, **caractérisé en ce que** l'actionneur (16) équipé de la tête de drapage (17) est déplaçable vers un carrousel (34) pour automatiquement déposer à celui-ci une bobine (35) sur laquelle est réenroulé un ruban de support (RS) et prélever sélectivement l'une des bobines (35) portées par le carrousel (34) sur lesquelles sont enroulés respectivement des ensembles à rubans de support (RS) et couches de matériaux composites (RM).

8. Procédé selon la revendication 6 ou 7, **caractérisé en ce que** les actionneurs (16 ; 21-24) sont constitués par des robots.

9. Procédé selon l'une des revendications précédentes, **caractérisé en ce que** la couche de matériau composite (RM) accolée au ruban de support (RS) de chaque ensemble est prédécoupée à une longueur sensiblement égale à celle du moule allongé (3).

10. Procédé selon l'une des revendications précédentes, **caractérisé en ce que** le moule (3) présente en section transversale une forme en Té, oméga, Cé, I, L, Z.

11. Procédé selon l'une des revendications précédentes, **caractérisé en ce qu'**il consiste à contrôler séquentiellement et de façon synchronisée par une commande numérique (41) les différentes étapes de dépose, de formation, de compactage de chaque ensemble à ruban de support (RS) et couche de matériau composite (RM), les changements d'outils de compactage (33) et de bobine (35) de la tête de drapage (17) et le déplacement du moule (3) relativement à la tête de drapage (17) et aux outils de compactage (33).

12. Dispositif de fabrication automatisée d'au moins une pièce allongée à une ou plusieurs couches en matériaux composites, le dispositif comprend :
- une table (1) sur laquelle est positionné un moule allongé (3) présentant une forme complémentaire de celle de chaque pièce à réaliser,
- un portique (11) portant au moins deux actionneurs commandés (16 ; 21-24) à plusieurs degrés de liberté dans l'espace, l'un (16) des actionneurs étant équipé d'une tête de drapage (17) permettant de déposer sur le moule (3) une couche d'un matériau composite (RM) accolée à un ruban de support (RS) séparable de la couche de matériau composite (RM) et l'autre actionneur (21-24) étant équipé d'un outil de compactage (33), tel qu'un rouleau ou galet, amoviblement fixé à l'actionneur (21-24) et destiné à former et compacter une partie de l'ensemble à ruban de support et couche de matériau composite déposé sur le moule (3),
- des moyens (5,6,8,9,10) permettant un déplacement relatif guidé entre la table (1) équipée de son moule (3) et le portique (11) suivant une direction longitudinale du moule (3), et
- l'actionneur (21-24) à outil de compactage (33) pouvant être commandé pour changer d'outil de compactage par un autre outil de compactage différent après formation et compactage de la partie de l'ensemble à ruban et couche de matériau composite sur le moule (3) par déplacement relatif entre le moule (3) et l'outil de compactage (33) suivant une première direction et avant déplacement relatif entre le moule (3) et l'autre outil de compactage (33) suivant une seconde direction opposée à la première direction pour former et compacter la partie restante de l'ensemble à ruban de support et couche de matériau composite sur le moule (3).

13. Dispositif selon la revendication 12, **caractérisé en ce que** la tête de drapage (17) comprend une bobine (35) amoviblement fixée à la tête (17) et pouvant être entraînée en rotation dans un sens ou dans l'autre par un moteur commandé, sur laquelle bobine (35) est enroulé un ensemble à ruban de support (RS) et couche de matériau composite (RM) pouvant être déroulé de la bobine (35) lorsqu'elle est entraînée en rotation dans un sens déterminé par le moteur, et un rouleau (49) permettant d'appliquer et de déposer cet ensemble sur le moule (3) lors de son déroulement de la bobine (35) et lorsque la table (1) est déplacée relativement au portique (11) suivant la première direction et **en ce que** la bobine (35) peut être entraînée en rotation en sens inverse par le moteur pour réenrouler le ruban de support (RS) et le séparer de la couche de matériau composite (RM) déposée sur le moule (3) lorsque la table (1) est déplacée relativement au portique (11) suivant la seconde direction.

14. Dispositif selon la revendication 13, **caractérisé en ce que** la tête de drapage (17) comprend en outre, disposée à proximité de la bobine (35), une plaque creuse (45) formant couloir de guidage de l'ensemble à ruban de support et couche de matériau composite vers le rouleau d'application (49) lors du déroulement de cet ensemble de la bobine (35) ou du ruban de support (RS) vers la bobine (35) lors du réenroulement de ce ruban et deux rouleaux moletés motorisés de guidage (47) disposés entre la plaque de guidage (45) et le rouleau d'application (49).

15. Dispositif selon la revendication 14, **caractérisé en ce que** la plaque de guidage (45) est en forme d'entonnoir dont la grande ouverture est adjacente à la bobine (35) et est montée à pivotement commandé par un moteur relativement à la tête de drapage (17) entre une position dégagée permettant la fixation d'une bobine (35) à cette tête et sa position de guidage.

16. Dispositif selon l'une des revendications 13 à 15, **caractérisé en ce qu'**il comprend, situé à proximité du portique, un carrousel (34) de stockage de bobines (35) sur chacune desquelles est préalablement enroulé un ensemble à ruban de support (RS) et couche de matériau composite (RM) et **en ce que** l'actionneur (16) à tête de drapage (17) peut être commandé pour saisir et fixer amoviblement l'une choisie des bobines (35) du carrousel (34) à la tête de drapage (17).

17. Dispositif selon l'une des revendications 13 à 16, **caractérisé en ce que** les moyens de fixation amovible d'une bobine (35) à la tête de drapage (17) comprennent un embout tronconique (39) solidaire d'un axe (38) de support de la bobine (35) et un fourreau tronconique (44) monté à rotation à la tête de drapage (17) sous la commande d'un moteur et dans lequel peut être accouplé amoviblement l'embout tronconique (39).

18. Dispositif selon l'une des revendications 12 à 17, **caractérisé en ce qu'**il comprend deux unités de stockage d'outils de compactage situées au voisinage de chaque extrémité du portique et **en ce que** chaque actionneur à outil de compactage peur être commandé pour automatiquement déposer à l'une des unités de stockage un outil de compactage et saisir à cette unité un autre outil de compactage.

19. Dispositif selon l'une des revendications 12 à 18, **caractérisé en ce que** les moyens de déplacement permettent de déplacer en translation guidée la table (1) et son moule (3) sous le portique fixe (11) suivant la direction longitudinale au moule (3).

20. Dispositif selon la revendication 19, **caractérisé en ce que** les moyens de déplacement comprennent un pignon motorisé (6) solidaire de la table (1) en engrènement sur une crémaillère fixe (5) s'étendant parallèlement à la direction longitudinale du moule allongé (3) et au moins un rail de guidage fixe (10) parallèle à la crémaillère (5) et sur lequel peut se déplacer la table (1) de support du moule (3).

21. Dispositif selon l'une des revendications 12 à 20, **caractérisé en ce que** la table (1) supporte un plateau chauffant (2) sur lequel est disposé le moule allongé (3).

22. Dispositif selon l'une des revendications 12 à 21, **caractérisé en ce que** les actionneurs (16 ; 21-24) sont constitués par des robots à poignets articulés portant la tête de drapage (17) et les outils de compactage (33).

23. Dispositif selon l'une des revendications 12 à 22, **caractérisé en ce qu'**il comprend une commande numérique (41) permettant de commander de manière synchronisée et coordonnée les actionneurs (16 ; 21-24) à tête de drapage (17) et outils de compactage (33), les déplacements relatifs entre la table (1) de support du moule allongé (3) et le portique (11), les changements d'outils de compactage (33) et de bobine (35) de la tête de drapage (17) et les moteurs d'entraînement en rotation de la bobine (35) de la tête de drapage (17) dans les sens d'enroulement et de déroulement, de la plaque (45) et des rouleaux moletés de guidage (47) de cette tête.

## Claims

1. A method for automated manufacturing of at least one elongated part with one or several layers in composite materials from an elongated mold (3) having a shape mating that of the part to be made, the method comprises the steps of a) depositing by unwinding on the elongated mold (3) in a first predetermined direction along the mold (3), a first layer of a composite material (RM) placed beside a supporting tape (RS) which may be separated from the first layer, b) forming and compacting in the first direction a portion of the assembly of supporting tape (RS) and first layer of composite material (RM), as this assembly is gradually deposited on the mold (3) in order to partly conform this assembly to the shape of the mold, c) forming and compacting in a second direction opposite to the first direction, the remaining portion deposited or along the mold (3) of the assembly of supporting tape (RS) and first layer of composite material (RM) in order to completely conform this assembly to the shape of the mold (3) by rewinding the supporting tape (RS) in the second direction.

2. The method according to claim 1, **characterized in that** it consists of forming and compacting on the mold (3) the portion of the assembly of supporting tape (RS) and first layer of composite material (RM) by passing over this assembly in a first direction at least one compacting tool (33), such as a roll or roller, with a shape partly mating that of the mold (3) and of forming and compacting on the mold (3). The remaining portion of the assembly of supporting tape (RS) and first layer of composite material (RM) by automatically replacing each compacting tool (33) with another compacting tool (33), such as a roll or roller, of another shape partly mating that of the mold (3) and passing this other compacting tool (33) over this assembly in the second direction.

3. The method according to claim 1 or 2, **characterized in that** it consists of unwinding the assembly of supporting tape (RS) and first layer of composite material (RM) from a spool (35) removably attached to a draping head (17) during the relative displacement between the head (17) and the mold (3) in a first direction, the head (17) including a roller (49) for applying this assembly on the mold (3), and of rewinding on this spool (35) the supporting tape (RS) during the relative displacement of the draping head (17) and of the mold (3) in a second direction.

4. The method according to claim 3, **characterized in that** it consists, before depositing on the first layer of composite material secured to the mold (3) another assembly of supporting tape (RS) and second layer of composite material (RM) placed beside this tape, of automatically replacing the previous spool (35) of the draping head (17) on which the previous tape was rewound with another spool (35) on which is wound the supporting tape (RS) and the second layer of composite material (RM), of automatically replacing the other compacting tool (33) with the previous one and repeating the different steps a) to c) in order to deposit the other assembly of supporting tape (RS) and second layer of composite material (RM) on the first layer in composite material of the mold (3), and forming and compacting this assembly in order to completely conform it to the shape of the mold (3).

5. The method according to one of the preceding claims, **characterized in that** it consists of heating beforehand the mold (3) before carrying out the aforementioned steps a) to c).

6. The method according to one of claims 2 to 5, **characterized in that** it consists of longitudinally displacing the mold (3) under a fixed gantry (11) bearing at least the two controlled actuators (16; 21-24) which may be displaced in space according to several degrees of freedom and one (16) of which is equipped with the draping head (17) and the other one (21-24) is equipped with the compacting tool (33) removably attached to the actuator (21-24) and he used for forming and compacting each assembly of supporting tape and layer of composite material on the mold (3) in the first direction, and which may be replaced with another compacting tool (33) before using it for forming and compacting the assembly of supporting tape and layer of composite material on the mold (3) in the second direction.

7. The method according to claim 6, **characterized in that** the actuator (16) equipped with the draping head (17) is displaceable towards a carousel (34) in order to automatically deposit at the latter a spool (35) on which a supporting tape (RS) is rewound and selectively take one of the spools (35) borne by the carousel (34) on which are respectively wound assemblies with supporting tapes (RS) and layers of composite materials (RM).

8. The method according to claim 6 or 7, **characterized in that** the actuators (16; 21-24) are formed by robots.

9. The method according to one of the preceding claims, **characterized in that** the layer of composite material (RM) placed beside the supporting tape (RS) of each assembly is pre-cut to a length substantially equal to that of the elongated mold (3).

10. The method according to one of the preceding claims, **characterized in that** the mold (3) has a cross section with the shape of a T, omega, C, I, L, Z.

11. The method according to one of the preceding claims, **characterized in that** it consists of sequentially controlling in a synchronized way by a digital control (41), the different steps for depositing, forming, compacting each assembly of supporting tape (RS) and a layer of composite material (RM), the changes of compacting tools (33) and of spool (35) of the draping head (17) and the displacement of the mold (3) relatively to the draping head (17) and to the compacting tools (33).

12. A device for automated manufacturing of at least one elongated part with one or several layers in composite materials, the device comprises:
- a table (1) on which is positioned on an elongated mold (3) having a shape mating that of each part to be made,
- a gantry (11) bearing at least two controlled actuators (16; 21-24) with several degrees of freedom in space, one (16) of the actuators being equipped with a draping head (17) allowing deposition on the mold (3) of a layer of composite material (RM) placed beside a supporting tape (RS), which may be separated from the composite material layer (RM) and the other actuator (21-24) being equipped with a compacting tool (33), such as a roll or roller, removably attached to the actuator (21-24) and intended to form and compact a portion of the assembly of supporting tape and layer of composite material deposited on the mold (3),
- means (5, 6, 8, 9, 10) allowing relative guided displacement between the table (1) equipped with its mold (3) and the gantry (11) in a longitudinal direction of the mold (3), and
- the actuator (21-24) with a compacting tool (33) being controllable for changing a compacting tool with another different compacting tool after forming and compacting the portion of the assembly of tape and layer of composite material on the mold (3) by relative displacement between the mold (3) and the compacting tool (33) in a first direction and before relative displacement between the mold (3) and the other compacting tool (33) in a second direction opposite to the first selection in order to form and compact the remaining portion of the assembly of supporting tape and layer of composite material on the mold (3).

13. The device according to claim 12, **characterized in that** the draping head (17) comprises a spool (35) removably attached to the head (17) and which may be driven into rotation in one direction or the other by a controlled motor, on which spool (35) is wound an assembly of supporting tape (RS) and layer of composite material (RM), which may be unwound from the spool (35) when it is driven into rotation in a direction determined by the motor, and a roller (49) allowing this assembly to be applied and deposited on the mold (3) during its unwinding from the spool (35) and when the table (1) is displaced relatively to the gantry (11) in the first direction and **in that** the spool (35) may be driven into rotation in the opposite direction by the motor in order to rewind the supporting tape (RS) and separate it from the layer of composite material (RM) deposited on the mold (3) when the table (1) is displaced relatively to the gantry (11) in the second direction.

14. The device according to claim 13, **characterized in that** the draping head (17) further comprises, positione in proximity to the spool (35), a hollow plate (45) forming a corridor for guiding the assembly of supporting tape and layer of composite material towards the application roller (49) during the unwinding of this assembly of the spool (35) or of the supporting tape (RS) towards the spool (35) during the rewinding of this tape and two guiding motor-driven knurled rollers (47) positioned between the guiding plate (45) and the application roller (49).

15. The device according to claim 14, **characterized in that** the guiding plate (45) is funnel-shaped, the large aperture of which is adjacent to the spool (35) and is pivotally mounted controlled by a motor relatively to the draping head (17) between a cleared position, allowing attachment of a spool (35) to this head and its guiding position.

16. The device according to one of claims 13 to 15, **characterized in that** it comprises, located in proximity to the gantry, a carousel (34) for storing spools (35) on each of which is wound beforehand an assembly of supporting tape (RS) and layer of composite material (RM), and **in that** the actuator (16) with a draping head (17) may be controlled for grasping and removably attaching a selected one of the spools (35) of the carousel (34) to the draping head (17).

17. The device according to one of claims 13 to 16, **characterized in that** the means for removable attachment of a spool (35) to the draping head (17) comprise a frusto-conical endpiece (39) secured to an axis (38) for supporting the spool (35) and a frusto-conical sheath (44) rotatably mounted to the draping head (17) under the control of a motor and in which the frusto-conical endpiece (39) may be removably coupled.

18. The device according to one of claims 12 to 17, **characterized in that** it comprises two units for storing compacting tools, located in the vicinity of each end of the gantry and **in that** each actuator with a compacting tool may be controlled in order to automatically deposit at one of the storage units, a compacting tool and grasp at this unit, another compacting tool.

19. The device according to one of claims 12 to 18, **characterized in that** the displacement means give the possibility of translationally displacing with guidance, the table (1) and its mold (3) under the fixed gantry (11) in the longitudinal direction to the mold (3).

20. The device according to claim 19, **characterized in that** the displacement means comprise a motor-driven pinion (6) secured to the table (1), meshing with a fixed rack (5), extending parallel to the longitudinal direction of the elongated mold (3), and at least one fixed guiding rail (10) parallel to the rack (5), and on which the table (1) supporting the mold (3) may move.

21. The device according to one of claims 12 to 20, **characterized in that** the table (1) supports a heating plate (2) on which the elongated mold (3) is positioned.

22. The device according to one of claims 12 to 21, **characterized in that** the actuators (16; 21-24) are formed by robots with jointed wrists bearing the draping head (17) and the compacting tools (33).

23. The device according to one of claims 12 to 22, **characterized in that** it comprises a digital control (41) allowing synchronized and coordinated control of the actuators (16; 21-24) with a draping head (17) and compacting tools (33), the relative displacement between the table (1) for supporting the elongated mold (3) and the gantry (11), the changes of compacting tools (33) and of spool (35) of the draping head (17) and the motors for driving into rotation the spool (35) of the draping head (17) in the winding and unwinding directions, of the plate (45) and of the knurled guiding rollers (47) of this head.

## Patentansprüche

1. Verfahren für die automatisierte Herstellung mindestens eines länglichen Teils mit einer oder mehreren Verbundmateriallagen mit Hilfe einer längliche Form (3), die eine Form aufweist, die zu der Form des herzustellenden Teils komplementär ist, wobei das Verfahren die Schritte a) Aufbringen durch Abrollen auf die längliche Form (3) gemäß einer ersten vorbestimmten Richtung entlang der Form (3) einer ersten Lage eines Verbundmaterials (RM), die an einem Trägerband (RS) anhaftet, das von der ersten Lage trennbar ist, b) schrittweises Formen und Verdichten gemäß der ersten Richtung eines Abschnitts der Gruppe Trägerband (RS) und erste Verbundmateriallage (RM), sobald diese Gruppe auf der Form (3) aufgebracht ist, um diese Gruppe teilweise an die Form der Form anzupassen, c) Formen und Verdichten gemäß einer zweiten Richtung entgegengesetzt zur ersten Richtung des restlichen, entlang der gesamten Form (3) aufgebrachten Abschnitts der Gruppe Trägerband (RS) und erste Verbundmateriallage (RM), um diese Gruppe vollständig an die Form der Form (3) anzupassen und danach Trennen des tragenden Bands (RS) durch Abziehen von der ersten mit der Form (3) verbundenen Verbundmateriallage (RM) durch Wiederaufrollen des tragenden Bands (RS) gemäß der zweiten Richtung umfasst.

2. Verfahren nach Anspruch 1, **dadurch gekennzeichnet, dass** es darin besteht, den Abschnitt der Gruppe Trägerband (RS) und erste Verbundmateriallage (RM) auf der Form (3) durch Führen über diese Gruppe gemäß der ersten Richtung mindestens eines Verdichtungswerkzeugs (33), wie eine Rolle oder eine Scheibe, das eine Form hat, die zu der Form der Form (3) teilweise komplementär ist, zu formen und zu verdichten, und auf der Form (3) den restlichen Abschnitt Trägerband (RS) und erste Verbundmateriallage (RM) durch automatisches Ersetzen jedes Verdichtungswerkzeugs (33) durch ein anderes Verdichtungswerkzeug (33), wie eine Rolle oder eine Scheibe, mit einer anderen Form, die zu der Form der Form (3) teilweise komplementär ist, und Führen dieses anderen Verdichtungswerkzeugs (33) über diese Gruppe gemäß der zweiten Richtung zu formen und zu verdichten.

3. Verfahren nach Anspruch 1 oder 2, **dadurch gekennzeichnet, dass** es darin besteht, die Gruppe Trägerband (RS) und erste Verbundmateriallage (RM) von einer lösbar in einem Bandanlegekopf (17) befestigten Spule (35) bei der relativen Verlagerung zwischen dem Kopf (17) und der Form (3) gemäß der zweiten Richtung abzurollen, wobei der Kopf (17) eine Andruckrolle (49) dieser Gruppe auf die Form aufweist, (3) und das Trägerband (RS) bei der relativen Verlagerung des Bandanlegekopfs (17) und der Form (3) gemäß der zweiten Richtung wieder auf diese Spule (35) aufzurollen.

4. Verfahren nach Anspruch 3, **dadurch gekennzeichnet, dass** es darin besteht, die vorhergehende Spule (35) des Bandanlegekopfs (17), auf der das vorhergehende Band wieder aufgerollt wurde, vor dem Aufbringen einer anderen Gruppe Trägerband (RS) und zweite Verbundmateriallage (RM), die an diesem Band anhaftet, auf die erste mit der Form (3) verbundene Verbundmateriallage durch eine andere Spule (35) automatisch zu ersetzen, auf der das Trägerband (RS) und die zweite Verbundmateriallage (RM) aufgerollt sind, das andere Verdichtungswerkzeug (33) durch das vorhergehende automatisch zu ersetzen und die verschiedenen Schritte a) bis c) zu wiederholen, um die andere Gruppe Trägerband (RS) und zweite Verbundmateriallage (RM) auf die erste Verbundmateriallage der Form (3) aufzubringen und um diese Gruppe zu formen und zu verdichten, um sie vollständig der Form der Form (3) anzupassen.

5. Verfahren nach einem der vorangehenden Ansprüche, **dadurch gekennzeichnet, dass** es darin besteht, die Form (3) vor dem Durchführen der vorgenannten Schritte a) bis c) anzuwärmen.

6. Verfahren nach einem der Ansprüche 2 bis 5, **dadurch gekennzeichnet, dass** es darin besteht, die Form (3) längs unter einem starren Rahmen (11) zu verlagern, der mindestens zwei gesteuerte Aktuatoren (16; 21-24) trägt, die im Raum gemäß mehreren Freiheitsgraden verlagerbar sind und von denen einer (16) mit dem Bandanlegekopf (17) ausgerüstet ist und der andere (21-24) mit dem Verdichtungswerkzeug (33) ausgerüstet ist, das lösbar am Aktuator (21-24) befestigt ist und verwendet wird, um jede Gruppe Trägerband und Verbundmateriallage auf der Form (3) gemäß der ersten Richtung zu formen und zu verdichten und das durch ein anderes Verdichtungswerkzeug (33) ersetzbar ist, bevor es verwendet wird, um die Gruppe Trägerband und Verbundmateriallage auf der Form (3) gemäß der zweiten Richtung zu formen und zu verdichten.

7. Verfahren nach Anspruch 6, **dadurch gekennzeichnet, dass** der Aktuator (16), der mit dem Bandanlegekopf (17) ausgestattet ist, zu einem Karussell (34) verlagerbar ist, um auf diesem automatisch eine Spule (35) abzulegen, auf der ein Trägerband (RS) wieder aufgerollt ist und selektiv eine der Spulen (35) zu entnehmen, die von dem Karussell (34) getragen werden, auf denen jeweils Gruppen Trägerband (RS) und Verbundmateriallage (RM) aufgerollt sind.

8. Verfahren nach Anspruch 6 oder 7, **dadurch gekennzeichnet, dass** die Aktuatoren (16; 21-24) von Robotern gebildet werden.

9. Verfahren nach einem der vorangehenden Ansprüche, **dadurch gekennzeichnet, dass** die am Trägerband (RS) anhaftende Verbundmateriallage (RM) jeder Gruppe auf eine Länge vorgeschnitten ist, die etwa der Länge der länglichen Form (3) entspricht.

10. Verfahren nach einem der vorangehenden Ansprüche, **dadurch gekennzeichnet, dass** die Form (3) im Querschnitt eine T-, Omega-, C-, I-, L-, Z-Form aufweist.

11. Verfahren nach einem der vorangehenden Ansprüche, **dadurch gekennzeichnet, dass** es darin besteht, die verschiedenen Schritte des Aufbringens, des Formens, des Verdichtens jeder Gruppe Trägerband (RS) und Verbundmateriallage (RM), die Wechsel der Verdichtungswerkzeuge (33) und der Spule (35) des Bandanlegekopfs (17) und die Verlagerung der Form (3) relativ zum Bandanlagekopf (17) und zu den Verdichtungswerkzeugen (33) durch eine numerische Steuerung (41) sequentiell und synchronisiert zu überwachen.

12. Vorrichtung für die automatisierte Herstellung mindestens eines länglichen Teils mit einer oder mehreren Verbundmateriallagen, wobei die Vorrichtung umfasst:
- einen Tisch (1), auf dem eine längliche Form (3) positioniert ist, die eine Form aufweist, die zu der Form jedes herzustellenden Teils komplementär ist,
- einen Rahmen (11), der mindestens zwei gemäß mehreren Freiheitsgraden im Raum gesteuerte Aktuatoren (16; 21-24) trägt, wobei einer (16) der Aktuatoren mit einem Bandanlegekopf (17) ausgestattet ist, der es erlaubt, eine Lage eines Verbundmaterials (RM), die an einem Trägerband (RS) anhaftet, das von der Verbundmateriallage (RM) trennbar ist, auf die Form (3) aufzubringen, und der andere Aktuator (21-24) mit einem Verdichtungswerkzeug (33), wie eine Rolle oder Scheibe, ausgestattet ist, die lösbar am Aktuator (21- 24) befestigt und dazu bestimmt ist, einen Abschnitt der auf die Form (3) aufgebrachten Gruppe Trägerband und Verbundmateriallage zu formen und zu verdichten,
- Mittel (5, 6, 8, 9, 10), die zwischen dem Tisch (1), der mit seiner Form (3) ausgestattet ist, und dem Rahmen (11) eine gemäß einer Längsrichtung der Form (3) relative geführte Verlagerung erlauben, und
- wobei dem Aktuator (21-24) mit Verdichtungswerkzeug (33) befehlbar ist, das Verdichtungswerkzeug nach dem Formen und Verdichten des Abschnitts der Gruppe Band und Verbundmateriallage auf der Form (3) durch relative Verlagerung zwischen der Form (3) und dem Verdichtungswerkzeug (33) gemäß einer ersten Richtung und vor der relativen Verlagerung zwischen der Form (3) und dem anderen Verdichtungswerkzeug (33) gemäß einer zweiten Richtung, die der ersten Richtung entgegengesetzt ist, durch ein anderes unterschiedliches Verdichtungswerkzeug auszutauschen, um den restlichen Abschnitt der Gruppe Trägerband und Verbundmateriallage auf der Form (3) zu formen und zu verdichten.

13. Vorrichtung nach Anspruch 12, **dadurch gekennzeichnet, dass** der Bandanlegekopf (17) eine lösbar auf dem Kopf (17) befestigte Spule (35) umfasst, die von einem gesteuerten Motor rotierend in die eine oder in die andere Richtung antreibbar ist, wobei auf der Spule (35) eine Gruppe Trägerband (RS) und Verbundmateriallage (RM) aufgerollt ist, die von der Spule (35) abrollbar ist, wenn sie vom Motor in eine bestimmte Richtung rotierend angetrieben wird, und eine Rolle (49), die es erlaubt, diese Gruppe bei ihrem Abrollen von der Spule (35) und wenn der Tisch (1) relativ zum Rahmen (11) gemäß der ersten Richtung verlagert wird auf der Form (3) aufzubringen und abzulegen und dadurch, dass die Spule (35) vom Motor in die umgekehrte Richtung rotierend antreibbar ist, um das Trägerband (RS) wieder aufzurollen und es von der Verbundmateriallage (RM), die auf dem Tisch (3) abgelegt ist, zu trennen, wenn der Tisch (1) relativ zum Rahmen (11) gemäß der zweiten Richtung verlagert wird.

14. Vorrichtung nach Anspruch 13, **dadurch gekennzeichnet, dass** der Bandanlegekopf (17) ferner eine in der Nähe der Spule (35) angeordnete hohle Platte (45), die für die Gruppe Trägerband und Verbundmateriallage beim Abrollen dieser Gruppe von der Spule (35) zur Andruckrolle (49) oder für das Trägerband (RS) beim Wiederaufrollen dieses Bands auf die Spule (35) einen Führungskanal bildet und zwei motorisierte gerändelte Führungsrollen (47), die zwischen der Führungsplatte (45) und der Andruckrolle (49) angeordnet sind, umfasst.

15. Vorrichtung nach Anspruch 14, **dadurch gekennzeichnet, dass** die Führungsplatte (45) trichterförmig ist, wobei sich die große Öffnung neben der Spule (35) befindet und relativ zum Bandanlegekopf (17) von einem Motor gesteuert zwischen einer Freigabestellung, die die Befestigung einer Spule (35) an diesem Kopf erlaubt, und ihrer Führungsstellung schwenkbar montiert ist.

16. Vorrichtung nach einem der Ansprüche 13 bis 15, **dadurch gekennzeichnet, dass** sie in Rahmennähe ein Karussell (34) für die Lagerung von Spulen (35) umfasst, wobei zuvor auf jeder eine Gruppe Trägerband (RS) und Verbundmateriallage (RM) aufgerollt wurde und dadurch, dass der Aktuator (16) mit Bandanlegekopf (17) steuerbar ist, um eine aus dem Karussell (34) ausgewählte Spule (35) zu ergreifen und auf dem Bandanlegekopf (17) zu befestigen.

17. Vorrichtung nach einem der Ansprüche 13 bis 16, **dadurch gekennzeichnet, dass** die Mittel zur lösbaren Befestigung einer Spule (35) auf dem Bandanlegekopf (17) ein kegelstumpfförmiges Ende (39) umfassen, das mit einer tragenden Welle (38) der Spule (35) verbunden ist und eine kegelstumpfförmige Hülse (44), die von einem Motor gesteuert rotierend auf dem Bandanlegekopf (17) befestigt ist und auf der das kegelstumpfförmige Ende (39) lösbar koppelbar ist.

18. Vorrichtung nach einem der Ansprüche 12 bis 17, **dadurch gekennzeichnet, dass** sie zwei Einheiten für die Lagerung von Verdichtungswerkzeugen umfasst, die sich in der Nähe jedes Endes des Rahmens befinden und dadurch, dass jeder Aktuator mit Verdichtungswerkzeug steuerbar ist, um automatisch auf einer der Lagereinheiten ein Verdichtungswerkzeug abzulegen und von dieser Einheit ein anderes Verdichtungswerkzeug zu entnehmen.

19. Vorrichtung nach einem der Ansprüche 12 bis 18, **dadurch gekennzeichnet, dass** es die Verlagerungsmittel erlauben, den Tisch (1) und seine Form (3) unter dem starren Rahmen (11) gemäß der Längsrichtung der Form (3) in geführter Verschiebung zu verlagern.

20. Vorrichtung nach Anspruch 19, **dadurch gekennzeichnet, dass** die Verlagerungsmittel ein motorisiertes Zahnrad (6) umfassen, das mit dem Tisch (1) in Ineingriffnahme auf einer starren Zahnstange (5) verbunden ist, die sich parallel zur Längsrichtung der länglichen Form (3) erstreckt, und mindestens eine starre Führungsschiene (10) parallel zur Zahnstange (5), auf der der Ablagetisch (1) der Form (3) verlagerbar ist.

21. Vorrichtung nach einem der Ansprüche 12 bis 20, **dadurch gekennzeichnet, dass** der Tisch (1) eine Heizplatte (2) trägt, auf dem die längliche Form (3) angeordnet ist.

22. Vorrichtung nach einem der Ansprüche 12 bis 21, **dadurch gekennzeichnet, dass** die Aktuatoren (16; 21-24) von Robotern mit angelenkten Gelenken gebildet werden, die den Bandanlegekopf (17) und die Verdichtungswerkzeuge (33) tragen.

23. Vorrichtung nach einem der Ansprüche 12 bis 22, **dadurch gekennzeichnet, dass** sie eine numerische Steuerung (41) umfasst, die es erlaubt, die Aktuatoren (16; 21-24) mit Bandanlegekopf (17) und Verdichtungswerkzeugen (33), die relativen Verlagerungen zwischen dem Ablagetisch (1) der länglichen Form (3) und dem Rahmen (11), den Austausch der Verdichtungswerkzeuge (33) und der Spule (35) des Bandanlegekopfs (17) und die Motoren, die die Spule (35) des Bandanlegekopfs (17) in die Aufroll- und Abrollrichtungen, die Platte (45) und die gerändelten Führungsrollen (47) dieses Kopfs rotierend antreiben, synchronisiert und koordiniert zu steuern.
